# EUROPÄISCHE PATENTSCHRIFT

(11) **EP 3 515 644 B1**
(45) Veröffentlichungstag und Bekanntmachung des Hinweises auf die Patenterteilung: **07.06.2023**
(21) Anmeldenummer: 17765164.3
(22) Anmeldetag: 11.09.2017
(51) Int. Cl.: B23D 21/00, B23D 35/00, B26D 1/43, B26D 1/45, B26D 3/16

(54) **SCHNEIDEXZENTERANTRIEB MIT VARIABLEM HUB**
ECCENTRIC CUTTING DRIVE HAVING A VARIABLE STROKE
ENTRAÎNEMENT EXCENTRIQUE DE COUPE À COURSE VARIABLE

(30) Priorität: 23.09.2016 DE 102016117956
(43) Veröffentlichungstag der Anmeldung: 31.07.2019
(73) Patentinhaber: Rattunde AG, 19288 Ludwigslust (DE)
(72) Erfinder: RATTUNDE, Ulrich, 19322 Bentwisch (DE)
(74) Vertreter: Groth, Wieland
(86) Internationale Anmeldenummer: PCT/EP2017/072697
(87) Internationale Veröffentlichungsnummer: WO 2018/054706

(56) Entgegenhaltungen:
- FR-A1- 2 557 823
- JP-A- S5 214 990
- US-A- 2 526 163
- US-A- 3 494 233
- US-A1- 2012 011 976
- US-B1- 6 352 012

## Beschreibung

Die Erfindung betrifft eine Schneideinrichtung gemäß dem Oberbegriff des Anspruchs 1 und ein Verfahren zum Ablängen eines Profilabschnitts von einem Langprofil gemäß dem Oberbegriff des Anspruchs 10. Eine solche Schneideinrichtung und ein solches Verfahren sind beispielsweise aus der FR2557823 bekannt.

Schneideinrichtungen für Rohrschneidemaschinen sind im Stand der Technik natürlich hinlänglich bekannt.

Bei einigen bekannten Schneideinrichtungen ist eine lochförmige Schneidmatrize vorgesehen, die mit zwei Stellantrieben in Verbindung steht. Die beiden Stellantriebe wirken senkrecht zueinander und treiben die Schneidmatrize nacheinander zu einer vertikalen und zu einer horizontalen Hubbewegung an. Durch die zwei aufeinanderfolgenden Hubbewegungen wird ein in die Schneidmatrize eingestecktes Rohr abgetrennt. Dazu ist es erforderlich, dass der eine Rohrabschnitt positionsfest gehalten wird und die Schneidmatrize gegenüber dem festgehaltenen Rohrabschnitt die zwei senkrecht aufeinander stehenden Hubbewegungen ausführt. Nachteilig an der Schneideinrichtung mit zwei Hubbewegungen ist, dass mit dem ersten Hub die tangential zur Bewegungsrichtung liegende Rohrwand nicht geschnitten, sondern lediglich verformt wird. Die verformte Rohrwand wird dann durch den zweiten Hub geschnitten. Dadurch kommt es bei den abgelenkten Rohrabschnitten zu Verformungen der Rohrwand, die nachteilig sind.

Es ist daher Aufgabe der vorliegenden Erfindung, eine Schneidmaschine zur Verfügung zu stellen, die die oben genannten Nachteile vermeidet oder zumindest verringert.

Es ist auch Aufgabe der vorliegenden Erfindung, ein Verfahren zum Ablängen eines Rohrabschnitts von einem Rohr zur Verfügung zu stellen, mit dem die oben genannten Nachteile vermieden oder zumindest verringert werden können.

In einem ersten Aspekt wird die Aufgabe durch eine Schneideinrichtung einer Rohrschneidemaschine mit den Merkmalen des Anspruchs 1 gelöst.

Die erfindungsgemäße Schneideinrichtung umfasst eine lochförmige, bewegliche Schneidmatrize, die über einen Antriebshebel antreibbar ist und Kreisbewegungen mit kontinuierlich veränderbarem Hub durchführt. Die Schneidmatrize kann durch eine Überlagerung der Kreisbewegung mit einer Hubveränderung auch eine vorteilhafte, spiralförmige oder schneckenförmige Bewegung in der Fläche mit größer werdendem Hub durchführen. Der Hub ist dabei die radiale Entfernung des Kurbelzapfens von einer Mittellinie des Systems, die der Mittellinie einer Innenwelle entspricht.

Die Schneideinrichtung umfasst ein exzentrisch ausgeformtes Lager in einer Außenwelle, in dem ein exzentrisch ausgeformter Kurbelzapfenantrieb beweglich zur Außenwelle gelagert ist. Der Kurbelzapfenantrieb steht mit dem Antriebshebel in Wirkverbindung und eine Kreisbewegung des Kurbelzapfenantriebs erzeugt eine Kreisbewegung des Kurbelzapfens.

Eine Relativrotation des Kurbelzapfenantriebs und der Außenwelle verändern den Hub. Die Veränderung erfolgt bei kontinuierlicher Rotation günstigerweise ebenfalls kontinuierlich.

Die Schneideinrichtung ist vorzugsweise Teil einer Schneidmaschine, vorzugsweise Rohrschneidemaschine.

Die Erfindung macht von der Idee Gebrauch, zunächst ein Lager in einer Außenwelle zur Verfügung zu stellen, dass jedoch nicht konzentrisch zur Außenwandung der Außenwelle, sondern exzentrisch in ihr angeordnet ist. Durch eine Drehung der Außenwelle führt das Lager eine exzentrische Bewegung aus. Die Exzentrizität des Lagers ist vorbestimmt.

In das exzentrisch ausgeformte Lager ist der Kurbelzapfenantrieb beweglich gelagert, wobei der Kurbelzapfenantrieb selber einen exzentrisch an ihm angeordneten Kurbelzapfen aufweist. Die Exzentrizität des Kurbelzapfens am Kurbelzapfenantrieb entspricht der Exzentrizität des Lagers der Außenwelle. Vorzugsweise sind beide Exzentrizitäten gleich.

Der Kurbelzapfen steht mit dem Antriebshebel in Wirkverbindung und treibt über den Antriebshebel die antreibbare Schneidmatrize an. Unter einem Kurbelzapfen ist hier beispielsweise ein von dem Kurbelzapfenantrieb abstehender Stift zu verstehen, es kann sich dabei jedoch auch um eine in den Kurbelzapfenantrieb eingelassene Mulde oder ein Loch handeln. Kurbelzapfen bedeutet hier lediglich eine mechanische Verbindung zwischen Kurbelzapfenantrieb und Antriebshebel. Der Kurbelzapfen ist drehbar gegenüber dem Antriebshebel gelagert, dabei handelt es sich vorzugsweise um eine Verbindung in Form eines Zapfens und eines passenden Loches, wobei Stift und Loch an Antriebshebel und Kurbelzapfenantrieb oder umgekehrt angeordnet sein können.

Die Schneidmatrize schneidet sich in die Außenwandung des Langprofils ein und trennt einen Profilabschnitt ab. Unter einem Langprofil und dessen Abschnitt können Vollprofile, aber insbesondere auch Rohre, verstanden werden. Vorzugsweise ist ihr Außenquerschnitt kreisförmig ausgebildet.

Erfindungsgemäß sind zwei Bauteile mit Exzentrizitäten vorgesehen, wobei beide Exzentrizitäten gleich ausgebildet sind. In einer möglichen Stellung heben sich die beiden Exzentrizitäten auf, sodass der Kurbelzapfen bei Betätigung der Schneideinrichtung lediglich eine Drehbewegung um seine eigene Mittellinie durchführt. Dabei handelt es sich um die sogenannte Null-Hub-Stellung, während in einer anderen Stellung sich die Exzentrizitäten addieren und der Kurbelzapfen bei Betrieb der Schneideinrichtung eine Rotationsbewegung um die Mittellinie des Systems durchführt. Dabei handelt es sich um die sogenannte Maximal-Hub-Stellung. Der Hub des Kurbelzapfens kann kontinuierlich zwischen der Null-Hub-Stellung und der Maximal-Hub-Stellung verändert werden.

Vorzugsweise sind eine Mittellinie des Kurbelzapfenantriebs und eine Mittellinie der Außenwelle sowie eine Mittellinie einer Innenwelle paarweise parallel zueinander angeordnet. Die Innenwelle definiert mit ihrer Mittellinie vorzugsweise die Mittellinie des gesamten Systems. Die Innenwelle treibt günstigerweise über ein Zahnrad den Kurbelzapfenantrieb an, dazu weist der Kurbelzapfenantrieb eine Innenverzahnung auf, mit der eine Außenverzahnung der Innenwelle kämmt.

In einer bevorzugten Ausführungsform der Erfindung ist die Innenwelle durch einen rohrförmigen Abschnitt, der im Durchmesser klein ist, der Außenwelle hindurch geführt. Die Innenwelle kann in Innenlagern der Außenwelle gelagert sein und ihr gegenüber relativ beweglich ausgebildet sein. Die Innen- und die Außenwelle können somit an jeweils einem, dem Kurbelzapfenantrieb abgewandten Ende, mit jeweils einem Antriebszahnrad versehen sein, das jeweils mit einem Antrieb in Wirkverbindung steht. Die beiden Antriebsräder sind vorzugsweise um dieselbe Drehachse unmittelbar hintereinander angeordnet.

Vorzugsweise ist die Innenwelle durch einen ersten Motor, vorzugsweise Servomotor und die Außenwelle durch einen zweiten Motor, vorzugsweise Servomotor angetrieben.

Vorzugsweise sind die Mittellinie des Kurbelzapfenantriebs und die Mittellinie der Außenwelle in jeder möglichen Relativstellung des Kurbelzapfenantriebs und der Außenwelle exzentrisch zueinander angeordnet. Günstigerweise liegen die Mittellinie des Kurbelzapfens des Kurbelzapfenantriebs und die Mittellinie der Außenwelle in einer Null-Hub-Stellung aufeinander.

Besonders bevorzugt ist durch eine Drehzahldifferenz des ersten und zweiten Motors eine hubveränderliche Kreisbewegung des Kurbelzapfens einstellbar.

Eine Drehzahldifferenz führt zu einer kontinuierlichen Veränderung des Hubes des Kurbelzapfens. Bleibt eine Drehzahldifferenz bestehen, ändert sich auch ständig der Hub zwischen 0 und einem Maximum entsprechend einer Sinusfunktion.

Eine gleiche Drehzahl beider Motoren bedeutet, dass der momentan eingestellte Kurbelzapfenhub sich nicht mehr ändert. Er beträgt in der Regel aber nicht Null, sondern einen anderen momentan eingestellten Wert. Die Drehzahlen beider Motoren übertragen sich in gleicher Weise auf die Innen- bzw. Außenwelle. Sie können sich ohne Übersetzung oder mit gleicher Übersetzung übertragen.

Die Einstellung des Kurbelzapfenhubes erfolgt vorzugsweise nur über die Winkelpositionsdifferenz zwischen dem ersten Motor, vorzugsweise Servomotor und dem zweiten Motor, vorzugsweise Servomotor, wobei beide Motoren so referenziert werden, dass bei einem Kurbelzapfenhub von Null beide Antriebe den gleichen Winkel erhalten.

Beispielsweise ergeben sich folgende Zusammenhänge:
Motor 1=55° und Motor 2=55° → Winkelpositionsdifferenz 0° → Kurbelzapfenhub=0
Motor 1=155° und Motor 2=155° & Winkelpositionsdifferenz 0° & Kurbelzapfenhub=0
Motor 1=111° und Motor 2=111 ° & Winkelpositionsdifferenz 0° & Kurbelzapfenhub=0
Motor 1=55° und Motor 2=65° & Winkelpositionsdifferenz 10° & Kurbelzapfenhub>0 (=XX)
Motor 1=155° und Motor 2=165° → Winkelpositionsdifferenz 10° → Kurbelzapfenhub>0 (=XX)
Motor 1=55° und Motor 2=75° → Winkelpositionsdifferenz 20° → Kurbelzapfenhub>XX

Der Kurbelzapfenhub ist daher eine Funktion aus der Winkelpositionsdifferenz zwischen erstem und zweitem Motor.

Günstigerweise weist die Schneideinrichtung einen in das Rohr einführbaren Schneiddorn mit einem gegenüber der Rohrschneidemaschine feststehendem Abschnitt und einem ihr gegenüber beweglichen Abschnitt auf. Der Schneiddorn ist dazu bestimmt, die Schneidkraft während des Schneidvorganges von einer Rohrwand auf die gegenüberliegende Rohrwand zu übertragen und einer Verformung des Rohres dadurch entgegen zu wirken. Bei Vollprofilen ist kein Schneiddorn erforderlich.

Die Aufgabe wird hinsichtlich des Verfahrens durch ein eingangs genanntes Verfahren mit den Merkmalen des Anspruchs 10 gelöst.

Erfindungsgemäß wird eine Schneidmatrize einer Schneideinrichtung auf eine Null-Hub-Stellung eingestellt, d.h. die Winkelpositionsdifferenz zwischen dem ersten und zweiten Motor ist Null. Dann wird ein Langprofil in die Schneidmatrize eingeschoben, eine Innenwelle und eine Außenwelle werden bei gleicher Drehzahl und winkelpositionssynchron betrieben; dann wird eine Drehzahldifferenz zwischen der Innen- und der Außenwelle eingestellt, dadurch wird eine kontinuierliche Winkelpositionsverschiebung zwischen den Motoren hergestellt, die proportional zum Kurbelzapfenhub ist, wodurch eine Lage des Kurbelzapfens aus einer Mittellinie der Außenwelle in einer Spiralbewegung heraus gedreht wird. Der Kurbelzapfen treibt über einen Antriebshebel die Schneidmatrize auf eine Spiralbewegung an, die einen Rohrabschnitt durch eine spiralförmige Bewegung vom Rohr ablängt.

Vorzugsweise werden die Drehzahlen und damit die Winkelpositionsdifferenz zwischen dem erstem und dem zweitem Motor verändert. Dadurch verändert sich der Hub. Bei gleichbleibender Drehzahldifferenz und damit gleichbleibender Winkelpositionsdifferenz der Motoren ändert sich der Hub sinusförmig über die Zeit. Dadurch führt die Schneidmatrize eine spiralförmige Bewegung von einer Spiralmitte zu einem äußeren Spiralende mit zunehmendem Durchmesser durch.

Es sind aber auch andere Schneidbewegungen möglich, wie z.B.:
- umlaufende Spiralbewegung mit unterschiedlicher Steigung während des Schneidprozesses,
- umlaufende Spiralbewegung mit konstanter Steigung während des Schneidprozesses,
- stehende Schneidbewegung vertikal und horizontal getrennt (diese Schnittvariante entsteht, wenn jeweils nur ein Motor eine Winkelpositionsänderung vornimmt und der andere Motor feststeht und
- Kombinationen zwischen den vorgenannten Varianten.

Die Steigungen lassen sich durch Änderung der Drehzahldifferenz erzielen.

Die Erfindung wird anhand eines Ausführungsbeispiels in zehn Figuren beschrieben. Dabei zeigen:
- Fig. 1: eine Schnittansicht des Funktionsprinzips einer erfindungsgemäßen Schneideinrichtung einer Rohrschneidemaschine in einer Null-Hub-Stellung,
- Fig. 2: eine Schnittansicht gemäß Fig. 1 der Schneideinrichtung in einer Maximal-Hub-Stellung,
- Fig. 3: eine Explosionsdarstellung der Schneideinrichtung,
- Fig. 4: eine Außenwelle in einer Frontansicht,
- Fig. 5: die Außenwelle in einer seitlichen Ansicht,
- Fig. 6: einen Kurbelzapfenantrieb in einer Frontansicht,
- Fig. 7: den Kurbelzapfenantrieb in einer seitlichen Ansicht,
- Fig. 8: die Schneideinrichtung der erfindungsgemäßen Rohrschneidemaschine in einer perspektivischen Ansicht,
- Fig. 9: die Schneideinrichtung mit abgenommener Abdeckung,
- Fig. 10: eine Schnittansicht der Schneideinrichtung in Fig. 8 entlang der Linie VIII-VIII.

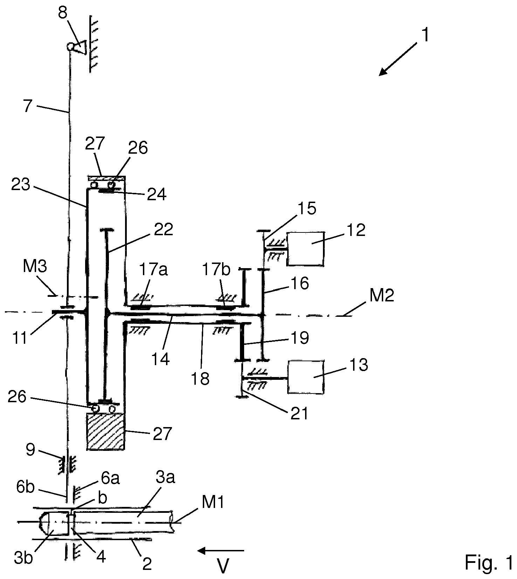

Das in Fig. 1 dargestellte Funktionsprinzip zeigt die Funktionsweise einer erfindungsgemäßen Schneideinrichtung 1 einer Rohrschneidemaschine. Im unteren Bereich ist das abzulängende Rohr 2 dargestellt. In das Rohr 2 ist ein zweiteiliger Schneiddorn 3a, 3b eingeführt, der einen etwas geringeren Außendurchmesser als einen Innendurchmesser des abzulängenden Rohres 2 aufweist, sodass der Schneiddorn 3a, 3b ohne zu verklemmen im Rohr 2 hin und her verschoben werden kann. Der Schneiddorn 3a, 3b weist einen feststehenden Teil 3a und einen beweglichen Teil 3b auf, der feststehende Teil 3a bleibt während des Abschneidens eines Rohrabschnittes 2a vom Rohr 2 relativ zum Gehäuse und zur gesamten Tragkonstruktion der Rohrschneidemaschine positionsfest, während der bewegliche Teil 3b gegenüber dem feststehenden Teil 3a beweglich ist und mit einer umlaufenden Spaltbreite von etwa b=0,1 mm vom feststehenden Teil 3a beabstandet ist, während der bewegliche Teil 3b entlang einer Schneiddornmittelachse M1 etwa mittig am feststehenden Teil gelagert ist. Die Lagerung ist hier nicht im Detail dargestellt. In einer Flucht mit dem Spalt 4 des Schneiddornes 3a, 3b ist ein vorzugsweise gleich breiter Spalt zwischen einer feststehenden Schneidmatrize 6a und einer antreibbaren Schneidmatrize 6b. Durch eine größer werdende schneckenförmige Kreisbewegung der antreibbaren Schneidmatrize 6b relativ zur feststehenden Schneidmatrize 6a wird das abzulängende Rohrstück 2a vom Rohr 2 abgeschnitten. Der Schneiddorn 3a, 3b wirkt einem Verbiegen einer Rohrwandung des Rohres 2 entgegen, der Schneiddorn 3a, 3b, insbesondere der bewegliche Teil 3b des Schneiddornes 3a, 3b überträgt die Kräfte durch den abzulängenden Rohrabschnitt 2a radial hindurch auf die gegenüberliegende Rohrwandung.

Die antreibbare Schneidmatrize 6b ist als kreisrundes Loch mit scharfer Lochkante ausgebildet, das an einem Antriebshebel 7 angeordnet ist. Der Antriebshebel 7 ist in einem Schwenklager 8 mit einer Vertikalführung gelagert, in einem geringen Abstand zur Schneidmatrize 6a, 6b ist eine Axialführung 9 für den Antriebshebel 7 vorgesehen, die ein Ausklappen des Antriebshebels 7 in Schubrichtung V des Rohres 2 verhindert.

Der Antriebshebel 7 wird mittels eines Kurbelzapfens 11 zu der erfindungsgemäßen, schneckenförmigen Bewegung angetrieben.

Die schneckenförmige Bewegung wird dabei durch zwei sich überlagernde Bewegungen erzeugt, die jeweils von einem Servomotor 12, 13 erzeugt werden. Jeder der beiden Servomotoren 12, 13 läuft mit einer Umdrehungszahl von 5000-6000 Umdrehungen/Minute.

Ein erster Servomotor 12 treibt über ein Zahnradgetriebe eine Innenwelle 14 an, dazu ist an einem Ende der Innenwelle 14 ein erstes Antriebszahnrad 16 vorgesehen, das mit einem ersten Ritzel 15, das vom ersten Servomotor 12 angetrieben wird, zusammenwirkt. Die Innenwelle 14 ist in zwei Innenlagern 17a, 17b gelagert, die Innenlager 17a, 17b sind innen in einer Außenwelle 18 vorgesehen.

Die Außenwelle 18 wiederum wird über ein Getriebe umfassend ein zweites Antriebszahnrad 19 und ein zweites Ritzel 21 durch den zweiten Servomotor 13 angetrieben. Am anderen Ende der Innenwelle 14 ist ein Zahnrad 22 einer Innenwelle 14 für einen Kurbelzapfenantrieb 23 vorgesehen. Das Zahnrad 22 mit einer Außenverzahnung an der Innenwelle 14 kämmt mit einer Innenverzahnung 24 am Kurbelzapfenantrieb 23. Die Außenwelle 18 verbreitert sich zum Antriebshebel 7 hin sprungartig. Sie weist an dem verbreiterten Abschnitt ein Kurbelzapfenlager 26 für den Kurbelzapfenantrieb 23 auf, das jedoch exzentrisch zum Außenumfang 27 der Außenwelle 18 angeordnet ist. Die Exzentrizität ε ist durch die unterschiedliche Wandstärke der Außenwelle 18 im Abschnitt des Kurbelzapfenlagers 26 dargestellt. Das Kurbelzapfenlager 26 ist ebenfalls mit der Exzentrizität ε zum Außenumfang versehen. Die Außenverzahnung der Innenwelle 14 kämmt mit der Innenverzahnung 24 des Kurbelzapfenantriebs 23 an der Stelle, an der die Wandstärke der Außenwelle im verbreiterten Abschnitt am größten ist, dieses ist in Fig. 1 unten der Fall.

Eine Mittellinie M2, die durch die Innenwelle 14 und das Zahnrad 22 der Innenwelle 14 zentral verläuft, ist eine Rotationssymmetrielinie der Innenwelle 14 und des Zahnrads 22 der Innenwelle 14. Das Kurbelzapfenlager 26 der Außenwelle 18 ist jedoch exzentrisch gegenüber der Mittellinie M2 der Innenwelle 14 angeordnet. Die Mittellinie M2 der Innenwelle 14 fällt mit einer Mittellinie M2 der Außenwelle 18 zusammen. Darüber hinaus ist der Kurbelzapfenantrieb 23, der hier als Topf oder Deckel dargestellt ist, mit dem Kurbelzapfen 11 versehen, wobei der Kurbelzapfen 11 wiederum exzentrisch zu einer Mittellinie M3 des Kurbelzapfenantriebs 23 angeordnet ist. Die Exzentrizität ε des Kurbelzapfenantriebs 23 entspricht dabei der Exzentrizität ε der Außenwelle 18, sodass bei entsprechender Stellung, wie sie in Fig. 1 dargestellt ist, sich die Exzentrizitäten ε aufheben und der Kurbelzapfen 11 auf der Mittellinie M2 der Innenwelle 14 angeordnet ist. Wenn der erste und der zweite Servomotor 12, 13 mit identischer Umdrehungszahl laufen, drehen sich die Außenwelle 18 und die Innenwelle 14 ohne Relativbewegung, sodass die relative Stellung, die in der Fig. 1 dargestellt ist, auch bei der Drehbewegung erhalten bleibt, also der Kurbelzapfen 11 immer auf der Mittellinie M2 des Systems, also der Mittellinie M2 der Innenwelle 14 angeordnet ist und eine Drehbewegung mit der Umdrehungszahl der Servomotoren 12, 13 durchführt.

Ein Hub h der Schneideinrichtung 1 beträgt in dem Zustand gemäß Fig. 1 null; d.h. insbesondere, dass die antreibbare Schneidmatrize 6b keine Bewegung durchführt. In dieser Stellung kann das Rohr 2 in die Schneidmatrize 6a, 6b eingeführt werden.

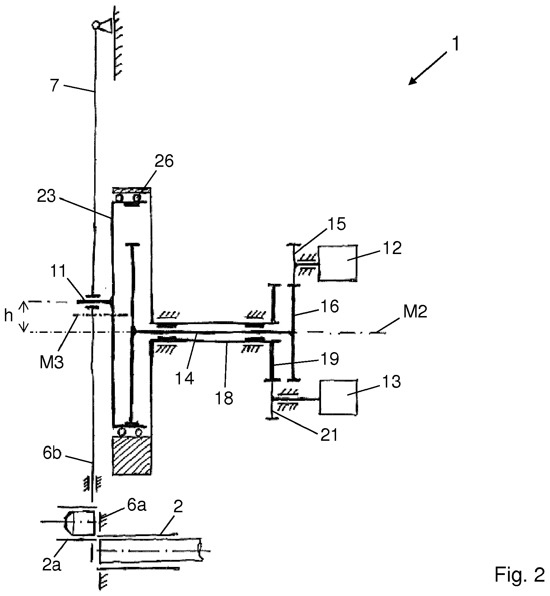

Fig. 2 zeigt eine Stellung der Schneidanordnung mit maximalem Hub h. Der Zustand gemäß Fig. 2 wird dadurch erreicht, dass die Außenwelle 18 festgehalten wird oder mit einer geringen Drehzahl läuft und die Innenwelle 14 angetrieben wird bzw. mit einer höheren Drehzahl als die Außenwelle 18 läuft; durch die unterschiedliche Drehzahl der Außenwelle 18 und der Innenwelle 14 dreht der Kurbelzapfenantrieb 23 im Kurbelzapfenlager 26. Die Drehzahldifferenz hat eine ständige Winkelpositionsveränderung zwischen dem ersten und zweiten Servomotor 12, 13 zur Folge. Der Hub führt eine Sinusbewegung durch. Nach einer halben Umdrehung oder einer 180° Drehung des Kurbelzapfenantriebs erreicht der Kurbelzapfen 11 die Stellung gemäß Fig. 2. Der Kurbelzapfen 11 rotiert um die Mittellinie M3 des Kurbelzapfenantriebs 23, die versetzt zur Mittellinie M2 der Innenwelle 14 angeordnet ist und parallel zur ihr angeordnet ist.

Insbesondere ist durch Einstellung einer Drehzahldifferenz des Kurbelzapfenantriebs 23 gegenüber der Außenwelle 18 eine kontinuierliche Veränderung des Hubs h des Kurbelzapfens 11, d. h. des Abstandes des Kurbelzapfens 11 von der Mittellinie M2 des Systems, d. h. der Mittellinie M2 der Innenwelle 14, einstellbar. In Fig. 2 ist der maximale Hub h eingestellt, die Exzentrizität ε des Kurbelzapfenantriebs 23 und die Exzentrizität ε der Außenwelle 18 müssen übereinstimmen, damit eine Null-Hub-Stellung gemäß Fig. 1 eingestellt werden kann. Wenn ein bestimmter Hub h erreicht ist, kann die Drehzahldifferenz, also die Winkelpositionsdifferenz bei dem eingestellten Wert festgehalten werden. Der Hub h bleibt dann konstant beim eingestellten Wert. Je nach Größe der Drehzahldifferenz ändert sich die Frequenz der Sinusbewegung des Hubs h.

Die antreibbare Schneidmatrize 6b hat in der Maximal-Hub-Stellung gemäß Fig. 2 eine gegenüber der feststehenden Schneidmatrize 6a verschobene Stellung, wodurch der Rohrabschnitt 2a vom Rohr 2 abgeschnitten bzw. eingeschnitten wird. Wenn der Maximal-Hub beibehalten werden soll, wird die Drehzahl beider Servomotoren 12, 13 gleich eingestellt.

In der in Fig. 2 dargestellten Maximal-Hub-Stellung werden bei nachfolgender Gleichschaltung der Umdrehungszahlen des ersten und zweiten Servomotors 12, 13 der Kurbelzapfen 11 zu einer reinen Rotationsbewegung um die Mittellinie M3 des Kurbelzapfenantriebs 23 angetrieben, was zu einer Kreisbewegung der antreibbaren Schneidmatrize 6b führt. Der Hub des Kurbelzapfens 11 von der Mittellinie M2 der Innenwelle 14 ist kontinuierlich einstellbar. Durch das Einstellen einer Drehzahldifferenz zwischen Außen- und Innenwelle 18, 14 kann zunächst ein kontinuierliches Sich-Entfernen des Kurbelzapfens 11 von der Mittellinie M2 der Innenwelle 14 erreicht werden und ein daraufhin ein Sich-Nähern des Kurbelzapfens 11 zur Mittellinie M2 der Innenwelle 14 erreicht werden. Bei großer Differenzdrehzahl ändert sich der Hub h schnell, bei kleiner Differenzdrehzahl ändert sich der Hub h langsam. Aber der Hub h ändert sich immer bei einer Drehzahldifferenz, die zu einer Winkelpositionsdifferenz der beiden Servomotoren 12, 13 führt. Das setzt vorzugsweise voraus, dass die Drehzahlen der Servomotoren 12, 13 sich in gleicher Weise auf die Drehzahlen der Innen- und Außenwelle 14, 18 übersetzen. Die Veränderung des Hubs h ist überlagert von der bestehenden Rotationsbewegung des Kurbelzapfens 11 aufgrund der Drehzahldifferenz der Innen- und Außenwelle 14, 18, sodass insgesamt eine in Fig. 2 dargestellte Schneckenbewegung des Kurbelzapfens 11 und damit eine Schneckenbewegung der beweglichen Schneidmatrize 6b verursacht wird, die zu einem die Rohrwandung rotativ zunehmend belastenden Schnitt führt.

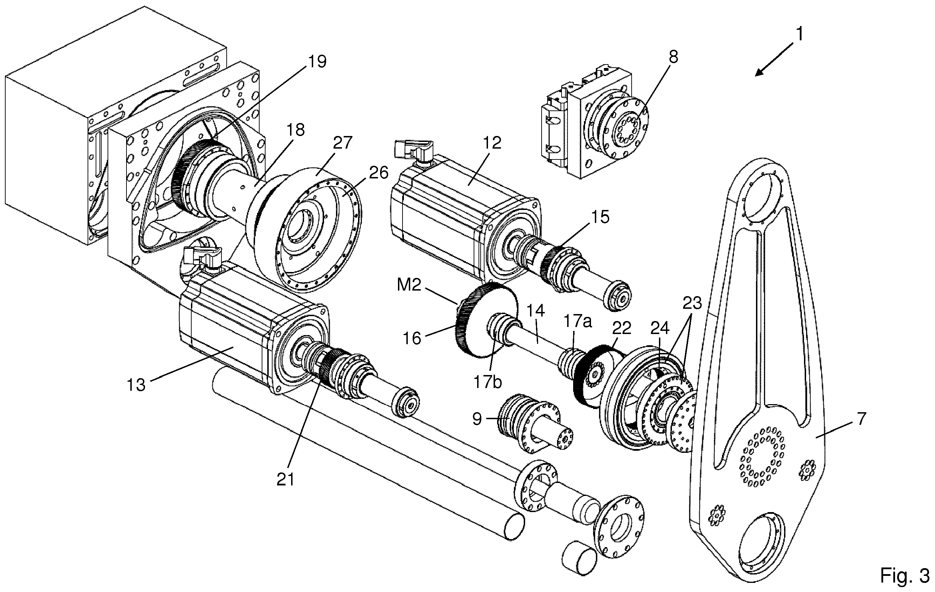

Fig. 3 zeigt einen Aufbau der Schneidvorrichtung 1 der Rohrschneidmaschine in einer Explosionsdarstellung, dabei sind die in den Fig. 1 und 2 dargestellten Bezugszeichen auch in der Fig. 3 mit gleicher Bedeutung eingezeichnet.

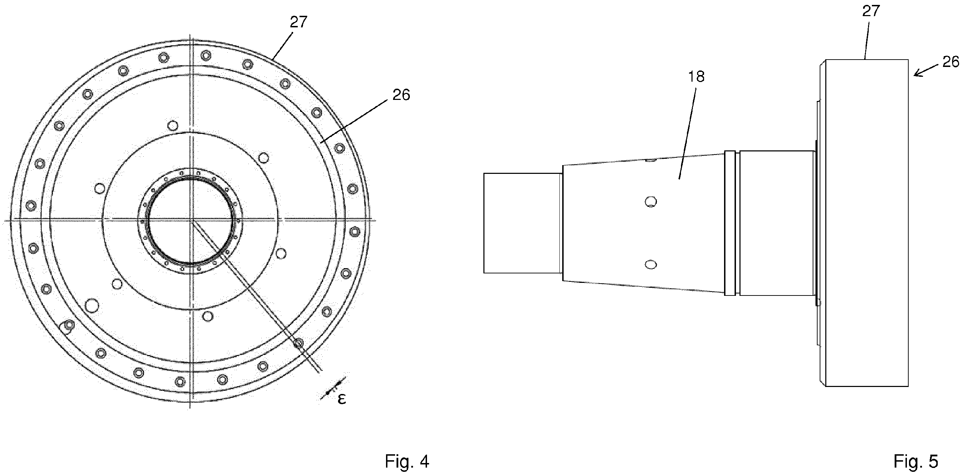

Insbesondere ist das Kurbelzapfenlager 26 der Außenwelle 18 exzentrisch gegenüber der Mittellinie M2 der Innenwelle 14 ausgeformt, dies ist in Fig. 3 schwer zu erkennen, jedoch zeigen die Fign. 4 und 5 die Exzentrizität ε dieser Anordnung, die bei ε=3 mm liegt. Die Exzentrizität ε betrifft dabei die relative Lage einer kreisrunden Innenbohrung, die aber konzentrisch zum Kurbelzapfenlager 26 ausgebildet ist, zum kreisrunden Außenumfang 27 der Außenwelle 18. Fig. 5 zeigt die Außenwelle 18 in einer seitlichen Ansicht, wobei die Exzentrizität ε nicht zu erkennen ist.

Die Außenwelle 18 wird mittels des zweiten Antriebszahnrades 19 angetrieben, das von dem zweiten Ritzel 21 am zweiten Servomotor 13 angetrieben wird. Durch die Außenwelle 18 hindurch geführt ist die Innenwelle 14, die in den zwei Innenlagern 17a, 17b innen in der Außenwelle 18 gelagert ist; das erste Antriebszahnrad 16 wird neben dem zweiten Antriebszahnrad 19 angeordnet, diese ist in Fig. 1 dargestellt und der erste Servomotor 12 treibt mit dem ersten Ritzel 15 das erste Antriebszahnrad 16 der Innenwelle 14 an. Die Innenwelle 14 ist positionsfest und drehfest mit dem Zahnrad 22 mit Außenverzahnung an der Innenwelle 14 verbunden, das mit der Innenverzahnung 24 des Kurbelzapfenantriebs 23 kämmt. Der Kurbelzapfenantrieb 23 ist hier nicht einen Kurbelzapfen 11 aufweisend dargestellt, sondern er weist eine zentrale Öffnung 11' auf, in die ein fest an dem Antriebshebel 7 angeordneter Zapfen 7' drehbar eingreift. Im oberen Bereich der Fig. 3 ist das Schwenklager 8 und im unteren Bereich die Axialführung 9 für den Antriebshebel 7 dargestellt.

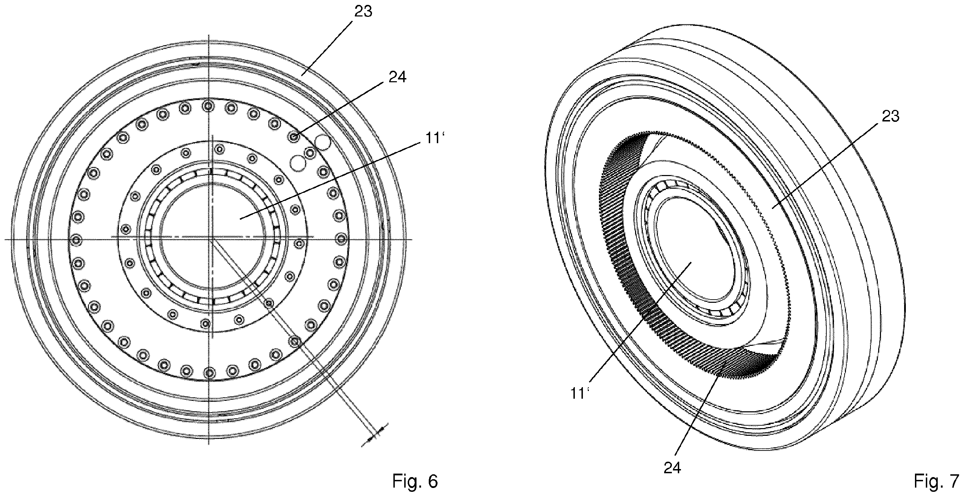

Der Kurbelzapfenantrieb 23 ist wiederum in Fig. 6 und 7 zu sehen. Dabei ist in Fig. 6 zu erkennen, dass der Außenumfang des Kurbelzapfenantriebs 23 in Fig. 6, der positionsfest im Kurbelzapfenlager 26 der Außenwelle 18 gemäß Fign. 4 und 5 aufliegt, exzentrisch gegenüber dem Mittelpunkt der kreisrunden zentralen Öffnung 11', die in ihrer Funktion dem Kurbelzapfen 11 entspricht, ausgebildet. D. h. eine Drehbewegung der zentralen Öffnung 11' führt zu einer exzentrischen Bewegung oder einer Kreisbewegung um den Mittelpunkt des Außenumfanges des Kurbelzapfenantriebs 23. Die Öffnung11' ist drehfest mit der Innenverzahnung 24 gemäß Fig. 7 verbunden, in das das Zahnrad 22 gemäß Fig. 3 eingreift.

Die Funktionsweise entspricht der in den Fign. 1 und 2 dargestellten Funktionsweise.

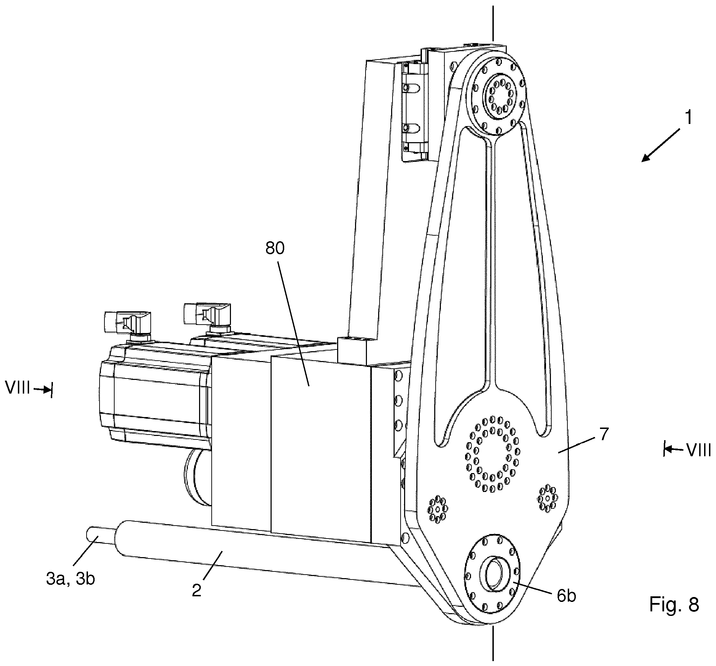

In den Fign. 8, 9 und 10 ist die Schneidvorrichtung 1 der Fig. 3 in der zusammengebauten Anordnung dargestellt.

Fig. 8 zeigt die Schneidvorrichtung 1 mit einem Gehäuse 80, der Antriebshebel 7 ist beweglich gegenüber der Schneideinrichtung 1 angeordnet, unten ist das Rohr 2 dargestellt, das bereits durch die feststehende und die antreibbare Schneidmatrize 6a, 6b hindurch gesteckt ist, in dem Rohr 2 ist der Schneiddorn 3a, 3b eingesteckt.

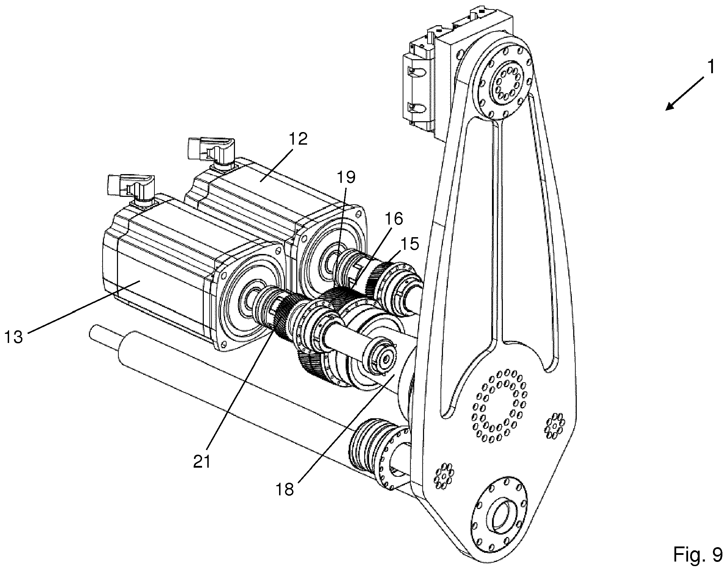

Fig. 9 zeigt die Schneideinrichtung 1 mit abgenommenem Gehäuse 80, dabei ist zu erkennen, dass der erste und der zweite Servomotor 12, 13 mit ihren Ritzeln 15, 21 in Antriebszahnräder 16, 19 der Innen- und Außenwelle 14, 18 eingreifen und diese antreiben.

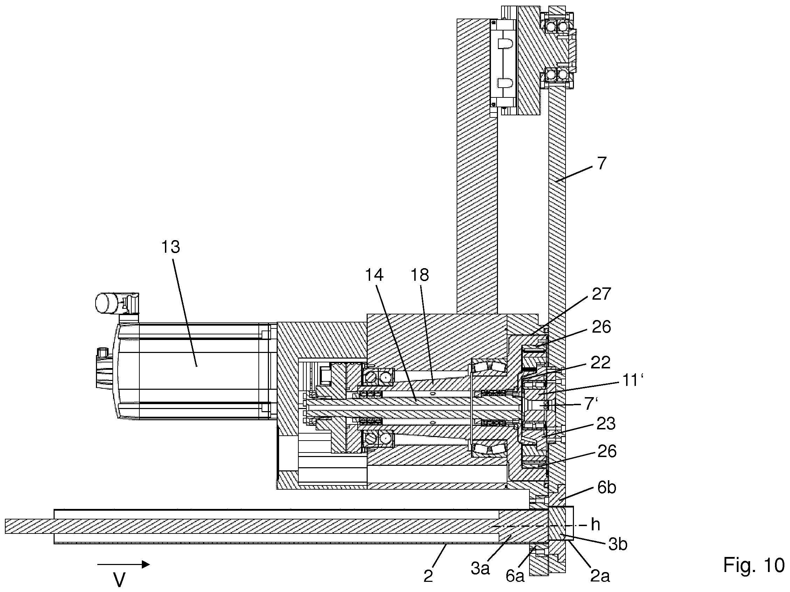

Fig. 10 zeigt die Schneideinrichtung 1 in einer seitlichen Schnittansicht, die in den Fign. 1, 2 und 3 dargestellten Bauteile mit ihren Funktionen sind in der Fig. 10 entsprechend dargestellt. Zur Funktionsweise wird auf die Beschreibung zu den Fign. 1, 2 und 3 verwiesen. Fig. 10 zeigt die antreibbare Schneidmatrize 6b mit einem Hub h, ein Rohrabschnitt 2a ist bereits vom Rohr 2 abgelängt, die antreibbare Schneidmatrize 6b wird für einen nächsten Schnitt wieder in eine Null-Hub-Stellung verbracht. In der Null-Hub Stellung rotieren beide Servomotoren 12, 13 mit gleicher Drehzahl. Dann wird eine Drehzahldifferenz eingestellt, sodass sich die Winkelposition der beiden Servomotoren 12, 13 zueinander ändert. Es kann eine vorbestimmte Drehzahldifferenz eingestellt werden, die beibehalten bleibt. Der Hub h verändert sich aufgrund der Drehzahldifferenz und die Schneidmatrizen 6a, 6b schneiden einen Abschnitt vom Rohr 2 ab. Das Rohr 2 wird dann ein Stück weit in Schubrichtung V vorgeschoben, sodass der abgelängte Rohrabschnitt 2a abfällt und der nächste Schneidvorgang durchgeführt werden kann.

### Bezugszeichenliste

- 1: Schneideinrichtung
- 2: Rohr
- 2a: Rohrabschnitt
- 3a: feststehender Schneiddorn
- 3b: beweglicher Schneiddorn
- 4: Spalt

- 6a: feststehende Schneidmatrize
- 6b: antreibbare Schneidmatrize
- 7: Antriebshebel
- 7': Zapfen
- 8: Schwenklager
- 9: Axialführung

- 11: Kurbelzapfen
- 11': zentrale Öffnung
- 12: Servomotor
- 13: Servomotor
- 14: Innenwelle
- 15: erstes Ritzel
- 16: erstes Antriebszahnrad
- 17a: Innenlager
- 17b: Innenlager
- 18: Außenwelle
- 19: zweites Antriebszahnrad

- 21: zweites Ritzel
- 22: Zahnrad mit Außenverzahnung
- 23: Kurbelzapfenantrieb
- 24: Innenverzahnung

- 26: Kurbelzapfenlager
- 27: Außenumfang

- 80: Gehäuse
- ε: Exzentrizität
- h: Hub

- M1: Schneiddornmittelachse
- M2: Mittellinie der Innenwelle und der Außenwelle
- M3: Mittellinie des Kurbelzapfenantriebs

- V: Schubrichtung

## Patentansprüche

1. Schneideinrichtung mit einer lochförmigen, beweglichen Schneidmatrize (6b), **dadurch gekennzeichnet, dass** die bewegliche Schneidmatrize (6b) über einen Antriebshebel (7) angetrieben ist, mit dem Kreisbewegungen mit kontinuierlich veränderbarem Hub (h) durchführbar sind,
wobei die Schneideinrichtung
mit einem exzentrisch ausgeformten Kurbelzapfenlager (26) in einer Außenwelle (18) vorgesehen ist, wobei in das Kurbelzapfenlager ein exzentrisch an einem Kurbelzapfenantrieb (23) angeordneter Kurbelzapfen (11) beweglich zur Außenwelle (18) gelagert ist,
und der Kurbelzapfen (11) mit dem Antriebshebel (7) in Wirkverbindung steht.

2. Schneideinrichtung nach Anspruch 1,
**dadurch gekennzeichnet, dass** eine Mittellinie (M3) des Kurbelzapfenantriebs (23) und eine Mittellinie (M2) der Außenwelle (18) und eine Mittellinie (M2) einer Innenwelle (14) paarweise parallel zueinander angeordnet sind.

3. Schneideinrichtung nach Anspruch 1,
**dadurch gekennzeichnet, dass** der Kurbelzapfenantrieb (23) eine Innenverzahnung (24) aufweist, die mit einer Außenverzahnung (22) der Innenwelle (14) kämmt.

4. Schneideinrichtung nach Anspruch 1,
**dadurch gekennzeichnet, dass** die Innenwelle (14) durch einen rohrförmigen Abschnitt der Außenwelle (18) hindurchgeführt ist.

5. Schneideinrichtung nach Anspruch 1, 2 oder 3,
**dadurch gekennzeichnet, dass** die Mittellinie (M3) des Kurbelzapfenantriebs (23) und die Mittellinie (M2) der Außenwelle (18) in jeder möglichen Relativstellung des Kurbelzapfenantriebs (23) und der Außenwelle (18) exzentrisch zueinander angeordnet sind.

6. Schneideinrichtung nach Anspruch 1,
**dadurch gekennzeichnet, dass** der Kurbelzapfen (11) des Kurbelzapfenantriebs (23) und die Mittellinie (M2) der Außenwelle (18) in einer Null-Hub-Stellung aufeinanderliegen.

7. Schneideinrichtung nach Anspruch 1,
**dadurch gekennzeichnet, dass** die Innenwelle (14) durch einen ersten Servomotor (12) und die Außenwelle (18) durch einen zweiten Servomotor (13) angetrieben ist.

8. Schneideinrichtung nach Anspruch 1,
**dadurch gekennzeichnet, dass** durch eine Drehzahldifferenz des ersten und zweiten Servomotors (12, 13) eine hubveränderliche Kreisbewegung des Kurbelzapfens (11) einstellbar ist.

9. Schneideinrichtung nach Anspruch 1,
**gekennzeichnet durch** einen in ein Langprofil (2) einführbaren Schneiddorn (3a, 3b) mit einem gegenüber der Schneideinrichtung (1) feststehenden Abschnitt (3a) und einem ihr gegenüber beweglichen Abschnitt (3b).

10. Verfahren zum Ablängen eines Profilabschnitts von einem Langprofil (2),
**dadurch gekennzeichnet, dass** eine bewegliche Schneidmatrize (6b) einer Schneideinrichtung (1) auf eine Null-Hub-Stellung eingestellt wird,
das Langprofil (2) in die Schneidmatrize (6b) eingelegt wird,
eine Innenwelle (14) und eine Außenwelle (18) bei gleicher Drehzahl betrieben werden,
eine Drehzahldifferenz der Innenwelle (14) und der Außenwelle (18) eingestellt wird und dadurch die Lage eines Kurbelzapfens (11) aus einer Mittellinie (M2) der Innenwelle (14) nach radial außen herausgedreht wird,
der Kurbelzapfen (11) über einen Antriebshebel (7) die Schneidmatrize (6b) auf eine herausgedrehte Bewegung antreibt, die in einer herausgedrehten Bewegung Langprofilabschnitte (2a) vom Langprofil (2) ablängt.

11. Verfahren nach Anspruch 10,
**dadurch gekennzeichnet, dass** die Drehzahldifferenz fest eingestellt wird und sich dadurch ein Hub (h) kontinuierlich ändert und der Kurbelzapfen (11) eine spiralförmige Bewegung beschreibt, die die antreibbare Schneidmatrize (6b) auf eine spiralförmige Bewegung antreibt, die in einer spiralförmigen Bewegung einen Langprofilabschnitt (2a) vom Langprofil (2) ablängt.

## Claims

1. Cutting device with a hole-type movable cutting die (6b), charcterised in that the movable cutting die (6b) is driven by a drive lever (7), by means of which circular movements with a continuously variable stroke (h) can be performed,
wherein the cutting device (1)
is provided with an eccentrically shaped crank pin bearing (26) in an outer shaft (18),
wherein a crank pin (11), which is arranged eccentrically on a crank pin drive (23), is movably supported in relation to the outer shaft (18) and the crank pin (11) is in operative connection with the drive lever (7).

2. Cutting device according to claim 1, **characterised in that** a centre line (M3) of the crank pin drive (23) and a centre line (M2) of the outer shaft (18) and a centre line (M2) of an inner shaft (14) are arranged in pairs parallel to one another.

3. Cutting device according to claim 1, **characterised in that** the crank pin drive (23) has an internal toothing (24) which meshes with an external toothing (22) of the inner shaft (14).

4. Cutting device according to claim 1, **characterised in that** the inner shaft (14) is passed through a tubular section of the outer shaft (18).

5. Cutting device according to claim 1, 2 or 3, **characterised in that** the centre line (M3) of the crank pin drive (23) and the centre line (M2) of the outer shaft (18) are arranged eccentrically relative to one another in any possible relative position of the crank pin drive (23) and the outer shaft (18).

6. Cutting device according to claim 1, **characterised in that** the crank pin (11) of the crank pin drive (23) and the centre line (M2) of the outer shaft (18) lie on one another in a zero stroke position.

7. Cutting device according to claim 1, **characterised in that** the inner shaft (14) is driven by a first servomotor (12) and the outer shaft (18) is driven by a second servomotor (13).

8. Cutting device according to claim 1, **characterised in that** a variable-stroke circular movement of the crank pin (11) can be set by a speed differential of the first and second servomotors (12, 13).

9. Cutting device according to claim 1, **characterised by** a cutting mandrel (3a, 3b) which can be introduced into a longitudinal profile (2) with a section (3a) which is stationary relative to the cutting device (1) and a section (3b) which is movable relative thereto.

10. Method for cutting off a profiled section from a longitudinal profile (2), **characterised in that** a cutting die (6b) of a cutting device (1) is set to a zero stroke position, the longitudinal profile (2) is placed in the cutting die (6a, 6b), an inner shaft (14) and an outer shaft (18) are operated at the same rotational speed, a speed differential of the inner shaft (14) and of the outer shaft (18) is set and as a result a position of the crank pin (23) is rotated radially outwards out of a centre line (M2) of the inner shaft (14), the crank pin (23) drives the cutting die (6b) by means of a drive lever (7) to an outwardly rotated movement which cuts off longitudinal profiled sections (2a) from the longitudinal profile (2) in an outwardly rotated movement.

11. Method according to claim 10, **characterised in that** the speed differential is firmly set and as a result a stroke (h) changes continuously and the crank pin (23) describes a spiral movement which drives the drivable cutting die (6b) to a spiral movement which cuts off a longitudinal profiled section (2a) from the long profile section (2a) in a spiral movement.

## Revendications

1. Dispositif de coupe avec une matrice de coupe (6b) mobile en forme de trou, **caractérisée en ce que** la matrice de coupe (6b) mobile est entraînée par un levier d'entraînement (7) avec lequel des mouvements circulaires peuvent être exécutés avec une course variable (h), cependant que le dispositif de coupe (1) est prévu avec un roulement de maneton de forme excentrique (26) dans un arbre extérieur (18), cependant qu'un maneton (11) placé excentré sur un entraînement de maneton (23) est positionné mobile par rapport à l'arbre extérieur (18) dans le roulement de maneton et que le maneton (11) est en liaison fonctionnelle avec le levier d'entraînement (7).

2. Dispositif de coupe selon la revendication 1, **caractérisé en ce qu'**une ligne médiane (M3) de l'entraînement de maneton (23) et une ligne médiane (M2) de l'arbre extérieur (18) et une ligne médiane (M2) d'un arbre intérieur (14) sont placées parallèlement l'une à l'autre par paires.

3. Dispositif de coupe selon la revendication 1, **caractérisé en ce que** l'entraînement de maneton (23) présente un engrenage intérieur qui s'engrène avec un engrenage extérieur (22) de l'arbre intérieur (14).

4. Dispositif de coupe selon la revendication 1, **caractérisé en ce que** l'arbre intérieur (14) traverse une section tubulaire de l'arbre extérieur (18).

5. Dispositif de coupe selon la revendication 1, 2 ou 3, **caractérisé en ce que** la ligne médiane (M3) de l'entraînement de maneton (23) et la ligne médiane (M2) de l'arbre extérieur (18) sont placées de manière excentrée l'une par rapport à l'autre dans toutes les positions relatives possibles de l'entraînement de maneton (23) et de l'arbre extérieur (18).

6. Dispositif de coupe selon la revendication 1, **caractérisé en ce que** le maneton (11) de l'entraînement de maneton (23) et la ligne médiane (M2) de l'arbre extérieur (18) sont superposés dans une position de course zéro.

7. Dispositif de coupe selon la revendication 1, **caractérisé en ce que** l'arbre intérieur (14) est entraîné par un premier servomoteur (12) et l'arbre extérieur (18) par un second servomoteur (13).

8. Dispositif de coupe selon la revendication 1, **caractérisé en ce qu'**un mouvement circulaire à course variable du maneton (11) est réglable par une différence du nombre de tours du premier et du second servomoteur (12, 13).

9. Dispositif de coupe selon la revendication 1, **caractérisé par** un poinçon de découpage (3a, 3b) qui peut être introduit dans un profilé longitudinal (2) avec une section fixe (3a) par rapport au dispositif de coupe (1) et une section mobile (3b) qui lui est opposée.

10. Procédé pour découper à longueur une section de profilé d'un profilé longitudinal (2), **caractérisé en ce qu'**une matrice de coupe (6b) mobile d'un dispositif de coupe (1) est réglée à une position de course zéro, que le profilé longitudinal (2) est mis en place dans la matrice de coupe (6b), qu'un arbre intérieur (14) et un arbre extérieur (18) fonctionnent avec le même nombre de tours, qu'une différence de nombre de tours de l'arbre intérieur (14) et de l'arbre extérieur (18) est réglée et que la position d'un maneton (11) est ainsi desserrée par rotation radialement vers l'extérieur à partir d'une ligne médiane (M2) de l'arbre intérieur (14), que le maneton (11) entraîne, par l'intermédiaire d'un levier d'entraînement (7), la matrice de coupe (6b) en un mouvement de desserrement par rotation qui découpe à longueur des sections de profilé longitudinal (2a) du profilé longitudinal (2) dans un mouvement de desserrement par rotation.

11. Procédé selon la revendication 10, **caractérisé en ce que** la différence du nombre de tours est réglée de manière fixe et qu'une course (h) varie ainsi en continue et le maneton (11) effectue un mouvement en forme de spirale qui entraîne la matrice de coupe (6b) qui peut être entraînée en un mouvement en forme de spirale qui découpe à longueur une section de profilé longitudinal (2a) du profilé longitudinal (2) dans un mouvement en forme de spirale.
